# EUROPÄISCHE PATENTSCHRIFT

(11) **EP 3 782 939 B1**
(45) Veröffentlichungstag und Bekanntmachung des Hinweises auf die Patenterteilung: **11.05.2022**
(21) Anmeldenummer: 20192285.3
(22) Anmeldetag: 22.08.2020
(51) Int. Cl.: B65G 43/10, G06Q 10/08

(54) **SELBSTFAHRENDES TRANSPORTSYSTEM**
SELF-PROPELLED TRANSPORT SYSTEM
SYSTÈME DE TRANSPORT AUTONOME

(30) Priorität: 22.08.2019 DE 102019122552
(43) Veröffentlichungstag der Anmeldung: 24.02.2021
(73) Patentinhaber: FlexLink Systems GmbH, 63069 Offenbach (DE)
(72) Erfinder: Deuser, Stefan, 63179 Obertshausen (DE)
(74) Vertreter: Stahl, Dietmar

(56) Entgegenhaltungen:
- WO-A1-2019/081092
- WO-A1-2019/084457
- CN-A- 108 438 788
- JP-A- 2016 160 040

## Beschreibung

Die Erfindung betrifft ein Transportsystem mit selbstfahrenden Ladeeinheiten nach dem Oberbegriff von Anspruch 1.

Die Erfindung gehört zu dem Gebiet der innerbetrieblichen automatischen Materialfluss- und Lagersysteme, die im Wesentlichen zum Transportieren und Lagern von Transportgut wie etwa Stückgut ausgebildet sind. Hierbei werden sogenannte Quellen zur Aufnahme von Transportgut (aus einem Lager) und Senken zur Abgabe von Transportgut (an einer Abladestelle wie einer Produktionslinie) logistisch miteinander verbunden. Einsatzgebiete hierfür ergeben sich vielfältig und sind in Verbindungen zwischen Produktions- oder Montageprozessen, in Montagelinien oder innerhalb von Lager- und Kommissionier-Prozessen zu finden.

Zum Stand der Technik gehören im Bereich der innerbetrieblichen automatischen Materialflusssysteme verschiedene Produkte und Lösungen:
1. Stetigförderer-Systeme sind z.B. aus Rollenbahnen zusammengesetzt oder als Kettenförderer oder Gurtförderer konfiguriert und bilden jeweils kontinuierliche Förderlinien zum Transportieren von Produkten als Transportgut/Stückgut.
2. Schienengeführte Fördersysteme sind z.B. in Form von Elektrohängebahnen, Elektrobodenbahnen oder als andersartige schienengeführte Fördersysteme mit elektrisch angetriebenen Fahrzeugen ausgebildet.
3. Fahrzeugsysteme mit z.B. selbstfahrend elektrisch angetriebenen und schienengeführten Transportfahrzeuge transportieren Transportgut / Stückgut. Die Energieversorgung erfolgt über Stromschienen oder eingebaute Hochleistungsbatterien. Solche Systeme werden für Transport- und Lageraufgaben in Verbindung mit Lagern bzw. zur Verbindung zwischen Quellen und Senken eingesetzt.
4. Fahrerlose Transportsysteme sind in aller Regel in Form von Anordnungen ausgebildet, die durch induktive Leiter oder optische Markierungen geführt auf dem Boden durch Werks- oder Lagerhallen fahren. Es können aber auch frei navigierende Fahrzeuge verwendet werden, die mit Einrichtungen versehen sind, um sich selbst im Arbeitsraum bzw. auf der Transportfläche zu orientieren.
5. Logistiksysteme mit Containereinrichtungen oder Lagersysteme mit Modulen zum Absetzen oder Aufnehmen von Stückgut stellen eine Möglichkeit zur flexiblen Gestaltung von großräumigen Lagereinrichtungen dar. Derartige Logistiksysteme können auch zur Konfiguration von Unterkünften, Büroanlagen oder Betriebseinrichtungen genutzt werden. Der modulare Aufbau ermöglicht die Erstellung von Wohn-, Betriebs- oder Lagereinrichtungen in wechselnder Konfiguration. Derartige Einrichtungen sind zwar im Großen gesehen flexibel, erlauben aber keine einfachen und kleinräumig anpassbaren Logistiklösungen. Sie sind daher nicht für einfach nachrüstbare Logistikanordnungen in variablen Umgebungen nutzbar.

In diesem Zusammenhang sind bereits verschieden Logistiklösungen für Transport- und Lagersystem bekannt geworden.

Aus der NO 317 366 B1 ist ein ferngesteuerter Transportwagen mit zwei Radsätzen und einer Hubvorrichtung zum Befahren von Schienen beschrieben. Die Schienen sind kreuzförmig auf Stapeln von Speicherfächern (vertikale Lagerkanäle für spezielle Lagerbehälter) ausgelegt, die durch vertikale Pfostenprofile voneinander getrennt sind. Mehrere Computer-betriebene Transportwagen sind gleichzeitig auf den sich kreuzenden Schienen in Betrieb. Vier feste Haupträder sind in der Transportebene in Richtung einer X-Achse und ein beweglich aufgehängter Radsatz ist auf Schienen in Richtung einer Y-Achse absenkbar, wobei der Transportwagen dann von den Haupträdern abgehoben wird. Ein Sensor am Transportwagen gibt das Erreichen der Position eines Kreuzungspunkts an. Der Transportwagen enthält eine Hebevorrichtung zum Erfassen von Lagerelementen beim Einlagern in die Lagereinrichtung und beim Ausfassen zum Versand über eine Kommissionierstation.

Aus der DE 10 2017 113 953 B3 sind eine passive Transportvorrichtung zum Transportieren von Fördergut sowie ein zugehöriges Transportsystem, ein Arbeitsverfahren sowie ein zugehöriges Steuerungsverfahren bekannt. An der Transportvorrichtung sind auf der Unterseite zumindest zwei Führungsmittel auf beiden Seiten vorgesehen, die korrespondierend zu seitlichen Führungen des Transportsystems ausgebildet sind. So wird die Transportvorrichtung von dem angetriebenen Förderelement entlang einer Transportbahn gefördert. Für eine Richtungsänderung im Bereich von Abzweigungsstücken können die Führungsmittel durch axiale Verstellung in oder außer Eingriff mit einer seitlichen Führung des Transportsystems gebracht werden. Zum Bremsen können Hubeinrichtungen ausgefahren werden, um die Transportvorrichtung anzuheben und auf seitlichen Abstützflächen abzustützen. Die passive Transportvorrichtung verfügt über eine intelligente Steuerung und aktive Stellelemente, um sich selbstständig von einem Ausgangsort zu einem Zielort in dem Transportsystem zu navigieren.

Aus der EP 3 372 534 A1 ist ein Roboter für den Transport von Lagerbehältern bekannt, der als fernbedientes zum Aufnehmen von Lagerbehältern aus einem Speichersystem ausgebildet ist. Der Roboter umfasst eine Fahrzeugkarosserie mit Antriebsmitteln zur Bewegung in einem Schienensystem auf dem Speichersystem und einen Abschnitt zur Justierung des Roboters über einem etwaigen Lagerplatz in eine Speichersäule innerhalb des Speichersystems. Eine Hubvorrichtung dient zum Heben von Vorratsbehältern aus den Speichersäulen im Speichersystem in den Innenraum des Roboters. Ein erstes Fahrwerk an der Karosserie ermöglicht eine Bewegung in einer X-Richtung zum Speichersystems. Ein zweites Fahrwerk ermöglicht die Bewegung in Y-Richtung zum Speichersystem. Das Fahrzeug umfasst zentral in der Fahrzeugkarosserie einen Hohlraum zur Aufnahme eines Behälters aus dem Speichersystem.

Aus der WO 2015/112665 A1 ist ein System zum Positionieren eines Hubwagens in einer automatisierten Lagereinrichtung bekannt. Das System umfasst den motorisierten Hubwagen, der so konfiguriert ist, dass er sich auf einer vorgefertigten Schienenbahn eines Lagerbereichs bewegen kann. Eine Codiereinrichtung auf dem Hubwagen erkennt eine Rotationslage eines sich drehenden Elements an dem Hubwagen und meldet diese als Bewegungssignal. Eine Steuerung auf dem Hubwagen kann das Bewegungssignal zur Rotationslage von der Codiereinrichtung empfangen und sie in eine Drehzahl des sich drehenden Elements umwandeln. Das rotierende Element kann eine Codierwelle, eine Antriebswelle, ein Antriebsrad oder ein weiteres ähnliches Element sein. Zur Koordination des Betriebs mehrerer Hubwagen sind einige Systeme mit Signalgebern oder Fotosensoren versehen, um den Hebewagen zu positionieren und das Bereitstellen von Anweisungen für den Wagen zu erleichtern.

Aus dem Dokument US 02018/0051459 A1 ist ein System und ein Verfahren zur Konfiguration von Gebäuden oder Lagern bekannt. Darin wird ein modulares Gebäudesystem oder Lagersystem mit einer Reihe von Behälterstapeln offenbart. Die nebeneinanderstehenden Behälterstapel werden innerhalb einer Rahmenstruktur mit einem vertikalen und einem horizontalen Gitter innerhalb der Stapel positioniert. Das Gitter weist im Wesentlichen rechtwinklig angeordnete Schienen auf, auf denen Lastenumschlaggeräte laufen können. Container mit Funktionen, die mit einer Reihe von wohn- oder gewerblichen Nutzungen verbunden sind, werden von den im Netz ausgeführten Roboter-Handlinggeräten in die und aus den Stapeln verschoben. Die in den Stapeln angeordneten Container werden nach Funktion nach Bedarf von einem Benutzer ausgewählt. So ist das Gebäude bei Nutzungsänderungen rekonfigurierbar. Das System ist nicht geeignet für kleinskalige logistische Verknüpfungen innerhalb von Produktions- und Intralogistikprozessen.

Aus der DE 10 2012 025 154 A1 ist eine Lageranordnung, insbesondere ein Lager für Container bekannt. Die Lageranordnung für Container weist eine Reihe gleichartiger aufeinander gestapelt angeordneter Module auf. Dabei werden maximal n Module übereinandergestapelt angeordnet, so dass die Lageranordnung eine Zahl n von Modulen gebildete Stockwerke aufweist. Die Lageranordnung ist mit Abladebereichen versehen, die aus weniger als n übereinander gestapelten Modulen bestehen und weisen daher jeweils eine Stockwerkhöhe von weniger als n übereinander gestapelten Modulen auf. Die Stockwerkzahl n ist eine ganze Zahl und ist größer als 1 ausgebildet, so dass minimal zwei Stockwerke als Lageranordnung vorgesehen sind. Hierbei weist ein Modul jeweils eine Bodenplatte auf und daran vier gleich lange, Säulen, auf die ein weiteres Modul aufsetzbar ist. Im Modul kann auf einem Auflageabschnitt ein Container von der Bodenplatte derart beabstandet gelagert sein, dass ein Fahrzeug unter den Container verfahrbar ist. Das Fahrzeug kann ein Hubwerk aufweisen, mit dem der Container von dem Auflageabschnitt abgehoben wird, so dass einfaches Transportieren des Containers ermöglicht ist.

Das Fahrzeug kann samt auf dem Hubwerk des Fahrzeugs aufgenommenem Container auf der Bodenplatte des Moduls in horizontaler Längsrichtung und/oder Querrichtung durch das Modul durchbewegt werden, so dass ein schneller Transport durch das Lager zu einer vorgesehenen Lagerstelle ermöglicht wird. Das Fahrzeug weist eine Spurführung oder ein Navigationssystem auf.

Das System ist in keinem Fall zum Einsatz für kleinskalige logistische Verknüpfungen innerhalb von Produktions- und Intralogistikprozessen geeignet.

Aus WO 2019/084457 A1 ist ein Transportsystem nach dem Oberbegriff von Anspruch 1 und ein diskontinuierliches Gittersystem für den Einsatz in Systemen und Verfahren zur Verarbeitung von Objekten einschließlich mobiler Matrixträgersysteme bekannt.

Für die Verarbeitung von bewegten Objekten wird ein automatisiertes Trägersystem offengelegt. Das automatisierte Trägersystem umfasst eine diskontinuierliche Vielzahl von Gleisabschnitten, auf denen ein automatisierter Träger zum Bewegen geleitet werden kann, und der automatisierte Träger enthält eine Basisstruktur, auf der ein Objekt unterstützt werden kann, und mindestens zwei Räder-Baugruppen bzw. Radanordnungen, die auf der Basisstruktur für schwenkbare Bewegungen von einer ersten Position in eine zweite Position gelagert werden, um eine Änderung der Bewegungsrichtung des Trägers zu bewirken.

Nachteile der Systeme aus dem bekannten Stand der Technik:
1. Bei den oben genannten Stetigförderer-Systemen wird das zu transportierende Fördergut direkt auf Funktionselementen (Förderband, Gliederkette) des Förderers transportiert. Damit das Fördergut den richtigen Weg findet sind entlang einer Förderstrecke komplexe Abzweigstellen, viele Antriebe und eine umfangreiche Sensorik erforderlich. Zusätzlich ist eine aufwendige elektrische Installation mit einer spezifischen systembezogenen Verkabelung und daraus folgend eine umfangreiche Inbetriebnahme erforderlich. Diese Systeme sind unflexibel bei Veränderungen im Transport-Layout und teuer in der Herstellung.
2. Bei den oben genannten schienengeführten Fördersystemen wird das Fördergut angetrieben oder auf selbstfahrenden Fahrzeugen transportiert, welche dem Schienenweg folgen. In das Fahrschienen-System sind daher angetriebene Weichen eingebaut, damit auch Wegverzweigungen abgefahren werden können. Auch hier ist entlang der Transportstrecke und besonders an den Weichen eine umfangreiche Sensorik erforderlich. Zusätzlich ist neben einer aufwendigen elektrischen Installation mit zugehöriger Verkabelung wiederum eine aufwändige Inbetriebnahme erforderlich. Auch diese Systeme sind unflexibel bei Veränderungen im Transport-Layout und teuer in der Herstellung.
3. Bei den oben genannten Transportfahrzeugsystemen wird das Fördergut auf selbstfahrenden Transportfahrzeugen (Transportwagen) bewegt. Jedes Transportfahrzeug kann sich dabei auf in einem Lagersystem fest vorgegebenen Transportstrecken in einer X- und einer Y-Richtung bewegen. Das Transportfahrzeug ist dabei auf Schienen geführt und bekommt seine Energie entweder über Schleifleitungen oder über sogenannte Nachladepunkte, wenn im Transportfahrzeug eine

Hochleistungsbatterie zur Stromspeicherung eingebaut ist. Derartige Nachladepunkte müssen über das Transport-Layout verteilt sein, da eine Hochleistungsbatterie nur eine begrenzte Energiemenge speichern kann. Zusätzlich ist auch hier eine aufwendige elektrische Installation mit zugehöriger Verkabelung und eine aufwändige Inbetriebnahme erforderlich. Solche Systeme sind ebenso unflexibel bei Veränderungen im Transport-Layout und teuer in der Herstellung.
4. Die oben genannten fahrerlosen Transportsysteme (FTS) sind dazu ausgelegt, um individuell selbstfahrend und -steuernd direkt auf einem Hallenboden in einem Fertigungsbereich oder in damit verbundenen Lagersystemen bewegt zu werden. Fahrerlose Transportsysteme (FTS) benötigen daher umfangreiche integrierte Sicherheitssysteme, da die sich ergebenden Transport- und Fahrwege sich in aller Regel mit einem gleichzeitig vorliegenden innerbetrieblichen Werkverkehr (z.B. Menschen, Gabelstapler, etc.) kreuzen. Solche Systeme sind bedingt flexibel was Veränderungen im Transport-Layout von Fahrstrecken angeht, da in jedem Fall noch Leitmittel (Induktivleiter, optische Leitmarken) angepasst und angelernt werden müssen. Herstellung und Betrieb fahrerloser Transportsysteme sind aber sehr teuer. Außerdem können sie nicht den Raum nutzen (z.B. über Lifte auch im Raum verkettet werden) da sie flurgebunden arbeiten. Derartige Transportsysteme haben einen hohen Platzbedarf und sind durch die erhöhten Sicherheitsanforderungen in ihrer spezifischen Durchsatzleistung limitiert.
5. Die oben rekonfigurierbaren Wohnsysteme oder Lagersysteme für Container sind dazu ausgelegt, um flexible Lagerkomplexe oder individuell modularisierte Wohn- oder Arbeitsraumsysteme zu erstellen. Hierzu sind Module so ausgebildet, dass sie miteinander verbindbar und über eine Mehrzahl von Stockwerken in großen Höhen- und Breitenanordnungen angeordnet werden können.

Hieraus ergeben sich große und aufwändig gestaltete Modulgebilde, die von außen bedient und beschickt werden müssen. Jedes Modul ist aufwändig gestaltet und nicht in kompakten Lageranordnungen einsetzbar. Die jeweils dreidimensionale Ausbildung der Module erfordert eine freie Zugänglichkeit einer kompletten Lagerfläche in allen drei Dimensionen. Eine einfache, kostengünstige Logistikeinrichtung in vorgegebenen Arbeitsumgebungen ist damit nicht realisierbar, da jeweils ein geschlossenes Modulsystem mit mehreren Modulen in Breiten- und Höhenausdehnung zur Verfügung gestellt werden muss.

Diese Systeme sind wenig flexibel was den Aufbau komplexerer Fahrweg-Layouts und vielfältiger Veränderungen im Transport-Layout von Fahrstrecken angeht, da in jedem Fall flächige Modulanordnungen erforderlich sind, um den Sinn der Modulsysteme für Wohncontainer oder Lagermodule zu erfüllen.

Weiterhin sind diese Systeme auch konzeptionell überhaupt nicht geeignet, um sie im Zusammenhang mit kleinskalierten logistischen Verknüpfungen innerhalb von Produktions- und Intralogistikprozessen einzusetzen.

Damit ist Ziel der Erfindung die Lösung unter anderem folgender Problematik. Bei herkömmlicher Fördertechnik für den Transport von Produkten, werden so genannte Produktträger verwendet. Die Produktträger werden dabei auf einem Stetig-Förderer (z.B. Rollenförderer, Kettenförderer, etc.) fortbewegt und über aktive Leit- und Steuerelemente wie z.B. Weichen, Stopper und Sensoren entlang der Förderstrecke gesteuert oder auch geroutet, d.h. so wird ein Förderweg festgelegt. Die genannten aktiven Leit- und Steuerelemente müssen sämtlich dezidiert in dem Fördersystem installiert, verkabelt und in Betrieb genommen werden. Wenn Änderungen in solchen Fördersystemen vorgenommen werden, erfordert das sehr viel Aufwand, z.B. mit neuer Verkabelung, Integration neue aktive Leit- und Steuerelemente und Sensoren entlang der Förderstrecke sowie eine aufwändige Inbetriebnahme.

Aufgabe der Erfindung ist es also, ein Materialflusssystem mit einfachstem Aufbau und großer Flexibilität des Transport-Layouts zu schaffen, das innerhalb vorhandener Produktions- oder Logistikeinrichtungen mit den dort spezifisch angelegten Arbeitsstrukturen und separat dazu sowohl in beliebiger Struktur aufgebaut als auch wieder beliebig verändert werden kann.

Die Lösung der Aufgabe erfolgt mit den Merkmalen eines Transportsystems nach Anspruch 1. Vorteilhafte Weiterbildungen ergeben sich aus den Unteransprüchen.

Bei der Erfindung des nachfolgend beschriebenen selbstfahrenden Transportsystems unter Verwendung von autonomen Transportfahrzeugen (Shuttles) sind die zuvor beschriebenen bekannten Mängel behoben.

Dazu wird ein Transportsystem bestehend aus wenigstens einem, vorzugsweise mehreren autonom und selbstfahrend ausgebildeten Transportfahrzeugen und weiterhin einer Mehrzahl von untereinander in einer Transportebene koppelbar angeordneten Fahrwegmodulen geschaffen. Jedes der Fahrwegmodule ist dabei aus einem sich im Wesentlichen zweidimensional innerhalb einer Transportebene erstreckenden Körper mit einer Auflage- und einer Arbeitsoberfläche gebildet.

Die Arbeitsoberfläche ist mit wenigstens einem Paar im Querschnitt dreidimensional geformter Fahrspuren versehen, die in einer oder zwei von rechtwinklig zueinander ausgerichteten Fahrtrichtungen angeordnet sind. Die Transportfahrzeuge stehen unter Kontaktierung wenigstens eines Teils der Fahrspuren mit den Fahrwegmodulen in Verbindung. In jedem der Fahrwegmodule ist ein Kennzeichnungselement mit einer jedem der Transportfahrzeuge zuordenbaren Codierung enthalten.

Die zuvor bekannten Probleme werden dadurch beseitigt, dass zum Aufbauen von flexiblen Fahrstrecken in einem Transport-Layout eine Mehrzahl von passiven Fahrwegmodulen mit einander verbunden, wie etwa ineinandergesteckt, und miteinander verriegelt werden sollen. Hierbei sind die Fahrwegmodule als sich in vorzugsweise einer Ebene, wie der Ebene der Fahrstrecken oder der Transportebene, erstreckende flache Körper ausgebildet. Vorzugsweise sind die Fahrwegmodule platten-, scheiben-, tafel-, rahmen-, band- oder folienförmig ausgebildet.

Es ist vorgesehen, dass jedes der Fahrwegmodule von je einem Transportfahrzeug befahrbar sein soll. Daher ist vorzugsweise in den Grundformen einer quadratischen oder rechteckigen Ausführung der Fahrwegmodule, die Größe der Fahrwegmodule und der Transportfahrzeuge aufeinander abgestimmt.

Da die Fahrwegmodule selbst keine aktiven Steuerelemente enthalten, ist keinerlei Verkabelung erforderlich. Die Fahrstrecken können daher in einem gewünschten Transport-Layout sehr schnell und mit minimalem Aufwand und ohne komplexe Planung beliebig verändert werden. Die komplette Fahrintelligenz ist in den selbstfahrenden Transportfahrzeugen, ggf. in Ergänzung durch außen liegende drahtlose Steuerungsbestandteile, implementiert. Die Energieversorgung der Transportfahrzeuge erfolgt über Hochleistungsbatterien in jedem einzelnen der Transportfahrzeuge oder alternativ auch über induktive Stromleitungen, die in den einzelnen Fahrwegmodulen verbaut sein können.

Jedes autonome Transportfahrzeug wird eigenständig mit Energie versorgt. Es hat weiterhin einen eigenen Steuerungsrechner an Bord und ist mit drahtlosen Kommunikationsmöglichkeiten wie etwa eine WLAN-Verbindung versehen. Aus diesem Grund können neben den Fahrantrieben weitere aktive Zusatzelemente angebracht werden. Als zusätzliche aktive Elemente können z.B. Hubeinheiten, Band- oder Kettenförderer, Kippschalen, etc. adaptiert werden.

Bei einer Neuinstallation oder bei Änderungen des Transport-Layouts werden dafür vorgesehene Softwareaktualisierungen über Weg und Funktionen durch ein übergeordnetes Leitsystem einfach drahtlos z.B. per WLAN, Bluetooth, NFC oder ähnliche Kommunikationsschnittstellen drahtlos auf die Steuerungsrechner der Transportfahrzeuge übertragen. Eine in jedem der Fahrwegmodule auslesbar vorhandene und eine Adresse sowie die Positionierung betreffende Codierung ist gleichzeitig auch die Basis für die Navigation der Transportfahrzeuge, die sich ausschließlich auf den Fahrwegmodulen in X- und Y-Richtung wie auf einem Schachbrett innerhalb der Transportebene bewegen können.

Ein großer Vorrat an unterschiedlichen Fahrstrecken kann innerhalb eines Transport-Layouts in der Art eines Schachbrettmusters innerhalb einer frei auswählbaren und definierbaren Transportebene fast beliebig aufgebaut werden.

Das Transport-Layout kann dabei beliebig in seiner Anordnung und Ausdehnung sowohl linear, als auch zweidimensional und über spezifisch zu konfigurierende Liftmodule sogar dreidimensional beliebig ausgebreitet aufgebaut werden.

Bei Neuinstallation eines Transport-Layouts oder bei Layout-Veränderungen werden den Transportfahrzeugen lediglich die Adressen und die Positionierung der Fahrwegmodule drahtlos übertragen und daraufhin können sich die autonomen Transportfahrzeuge sowohl orientieren als auch im Zusammenspiel mit weiteren derartiger autonomer Transportfahrzeuge betrieben werden.

Außerdem können Materialflusssysteme mit einem beliebig wählbaren Transport-Layout auf der Basis der Erfindung schneller und kostengünstiger realisiert werden als bei allen Arten anderer bisher bekannter Materialflusssysteme.

Der große Vorteil der Erfindung liegt in der sich ergänzenden Funktionalität der Fahrwegmodule im Zusammenspiel mit den Transportfahrzeugen. Ein Transport-Layout kann einfach und schnell, ohne Verkabelungsaufwand, schachbrettmusterartig mit beliebiger Wegbelegung aufgebaut werden. Auf dem so konfigurierten Fahrweg kann danach eine beliebige erforderliche Anzahl von Transportfahrzeugen platziert werden. Per WLAN können weiterhin mittels eines übergeordneten Leitsystems die Layout-Daten (Codierung der Fahrwegmodule mit Adresse und Positionierung) für das Transport-Layout an jedes im Transportsystem befindliche Transportfahrzeug übertragen werden, womit das Transportsystem betriebsbereit ist.

Das übergeordnete Leitsystem kann dabei natürlich auch zusätzlich mit einem kundenseitigen Unternehmensplanungs-System (ERP-System) kommunizieren, um von diesem Daten zur Transportplanung zu erhalten.

Wichtig an der Lösung ist, dass sich zwischen den Transportfahrzeugen und den Fahrwegmodulen eine abgestimmte ergänzende Funktion für Logistikaufgaben ergibt. Diese ergänzende Funktion beruht darauf, dass die Fahrwegmodule in ihrer Geometrie auf die Bewegungscharakteristik der Transportfahrzeuge abgestimmt sind und die Transportfahrzeuge die passive Charakteristik für die Ausführung ihrer autonomen Bewegung nutzen.

Die Fahrwegmodule sind erfindungsgemäß in X- und Y-Richtung nach Bedarf (form- und kraftschlüssig) miteinander verbunden. Als Grundform ist ein Fahrwegmodul quadratisch ausgebildet und mit je einem Fahrspurenpaar in jeder Richtung parallel zu den Seitenkanten der Modulplatte bzw. dem Modulrahmen versehen.

Es sind auch andere Formen möglich mit, quadratischer oder rechteckiger Außenkontur und mit einem oder mehreren Paaren von Fahrspuren in jeder Richtung. Vorstellbar sind auch Fahrwegmodule, die der Überbrückung von etwas größeren Entfernungen dienen und daher nur mit einem Fahrspurpaar über ein Rechteckmodul mit einer großen Länge ausgeführt sind. Ebenso können auch Fahrwegmodule mit einer gekrümmten Fahrbahn vorgesehen werden, so dass Richtungsänderungen des Fahrwegs ohne Steuerungshilfsmittel erzielbar sind.

Jedes Fahrwegmodul hat eine individuelle passive Codierung (z.B. RFID) zur Orientierung der Transportfahrzeuge die darüber hinweg fahren. Die Fahrwegmodule sind passive Platten oder Rahmen, die nur rein mechanisch miteinander verbunden werden. Es ist keine Verkabelung erforderlich. Bei einer Änderung des Transport-Layouts können ganz einfach weitere Fahrwegmodule in X- und Y- Richtung dazugefügt oder entnommen werden. Zur Überbrückung von größeren Strecken können auch Varianten von Fahrwegmodulen verwendet werden.

Damit sich die Transportfahrzeuge auf dem neuen Transport-Layout orientieren können, wird jedem Transportfahrzeug drahtlos (z.B. per WLAN) die aktuelle Anordnung und Codierung der Fahrwegmodule übertragen. Die Fahrwegmodule können direkt auf dem Boden oder auf einer beliebigen Unterkonstruktion befestigt werden.

Mit der Kombination aus Fahrwegmodulen und Transportfahrzeugen können Transport-Layouts beliebig linear oder schachbrettmusterartig aufgebaut und als Transportsystem, Puffersystem, Lagersystem und Sortiersystem genutzt werden.

Die Erfindung wird im Folgenden an Hand zeichnerischer Darstellungen beschrieben.

Dabei zeigen
- Figur 1: Eine Darstellung einer erfindungsgemäßen Zuordnung von Fahrwegmodulen zu einem Transport-Layout,
- Figur 1a: eine Darstellung einer erfindungsgemäßen Zuordnung von Fahrwegmodulen zu einem weiteren Transport-Layout,
- Figur 2: eine Draufsicht auf ein erfindungsgemäße Fahrwegmodule,
- Figur 3: einen Schnitt durch ein Transportfahrzeug auf einem Fahrwegmodul,
- Figur 4: ein Fahrwegmodul mit Rädern eines Transportfahrzeuges,
- Figur 4a/4b: Schnitte durch das Fahrwegmodul nach Figur 4 in X-/Y-Richtung,
- Figur 5A: ein Lagersystem mit zwei Positionen für Transportgut, das links / rechts entlang einer Verteilstrecke in Regalen ablegbar und abholbar ist,
- Figur 5B: das Transportfahrzeug im Lagersystem in Draufsicht und
- Figur 5C: das Transportfahrzeug im Lagersystem mit Blick ins Regal.

In der erfindungsgemäßen Lösung werden an sich bekannte autonome, selbstfahrende Transportfahrzeuge 2 verwendet, die mit einem integrierten Steuerrechner 10 und einer integrierten Sensorik 12 versehen sind. Integrierte Energiespeicher 9 z.B. als Hochleistungsbatterien sind aufladbar und/oder es ist eine induktive Stromaufnahme über standardisierte am Fahrweg positionierte Stromleiter 4 vorgesehen.

Das erfindungsgemäße Transportsystem ist modular aufgebaut und besteht aus den autonomen, selbstfahrenden Transportfahrzeugen 2 und für diese konfiguriert ausgeführten passiven Fahrwegmodulen 1, die sich im Wesentlichen innerhalb einer vorgebbaren Transportebene erstrecken. Die Transportfahrzeuge 2 sind über Räderfahrwerke formschlüssig in paarweise angeordneten Fahrspuren 6X und 6Y in Form von im Querschnitt trapezförmigen Nuten auf den passiven Fahrwegmodulen 1 geführt. Die Fahrspuren 6X und 6Y sind auf quadratisch ausgebildeten Fahrwegmodulen 1 drehsymmetrisch in einer X- und eine Y-Richtung angeordnet und bilden so allseitig ein gleiches Anschlussmuster für Fahrspuren von anderen Fahrwegmodulen 1.

Im Fall von rechteckig ausgebildeten Fahrwegmodulen 1 ergeben sich auf den jeweils einander gegenüberliegenden Kanten gleiche Anschlussmuster für die Fahrspuren.

Dadurch können die Fahrwegmodule 1 jeweils in X- und/oder Y-Richtung ganz einfach miteinander verbunden werden und etwa unter Einsatz von Verbindungselementen 5 kraft- und formschlüssig miteinander gekoppelt werden.

Es ist vorgesehen, dass Fahrwegmodule 1 von je einem Transportfahrzeug 2 befahrbar sind. Daher ist vorzugsweise in den Grundformen der quadratischen oder rechteckigen Ausführung die Größe der Fahrwegmodule 1 und der Transportfahrzeuge 2 aufeinander abgestimmt.

Jedes der Fahrwegmodule 1 weist ein spezifisches Codeelement 3 zur passiven Fahrwegcodierung auf. Die passive Fahrwegcodierung kann dabei mittels optischer Codierung oder mittels eines Transponders erfolgen. Ein Codeelement 3 kann daher in Form eines RFID-Tags oder eines QR-Code-Feldes ausgebildet und an gut abtastbaren Stellen entsprechend in das Fahrwegmodul 1 integriert sein, so dass die Transportfahrzeuge 2 jedes der Codeelemente 3 sicher abtasten können.

Der besondere Vorteil des modularen und intelligenten Transportsystems auf der Basis der Erfindung liegt darin, dass ein Transport-Layout auf der Basis der Fahrwegmodule 1 innerhalb sehr kurzer Zeit aufgebaut und auch verändert werden kann, da sich eine solche Anlage einfach als schachbrettartiger Aufbau ergibt. Die in jedem Fahrwegmodul 1 vorhandene Codierung auf dem Codeelement 3 ist gleichzeitig auch die Basis für die Navigation der Transportfahrzeuge 2, welche sich auf den Fahrwegmodulen 1 ausschließlich in den paarweise X- und Y-Richtung angelegten Fahrspuren 6X und 6Y vorwärts und rückwärts bewegen können.

Die vorzugsweise untereinander, zumindest aber in ihrer Anschlusskonfiguration zueinander identischen Fahrwegmodule 1 und die autonomen Transportfahrzeuge 2 sind dabei innerhalb eines wie zuvor beschrieben konfigurierten Transportsystems als funktional aufeinander abgestimmte Arbeitseinheit ausgebildet. Auf einem derartigen Transportsystem, das aus einer Mehrzahl von Fahrwegmodulen 1 aufgebaut ist, die damit auch eine Fahrstrecke mit einem komplexen und beliebig nutzbaren Transport-Layout darstellen, kann sich wiederum auch eine Mehrzahl der genannten autonomen Transportfahrzeuge 2 bewegen. Jedes dieser autonomen Transportfahrzeuge 2 ist dabei so ausgerüstet, dass es sich nach Vorgabe zielorientiert bewegen und dabei aber auch in Relation zu den weiteren Transportfahrzeugen 2 steuern kann. Dabei werden Kollisionen vermieden und die Fahrwege und Einsatzzeiten optimiert.

Der Aufbau und die Funktion eines Systems stellen sich wie folgt dar:

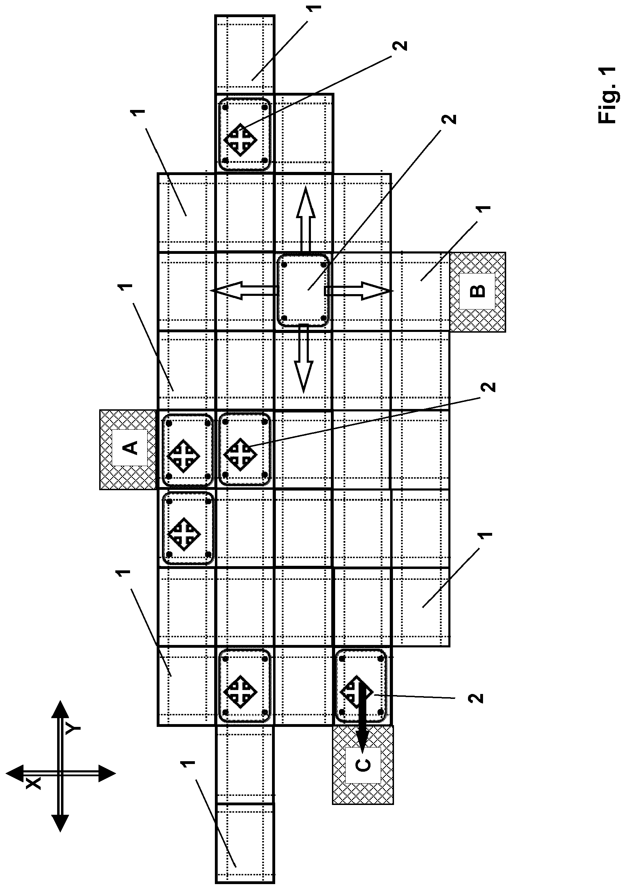

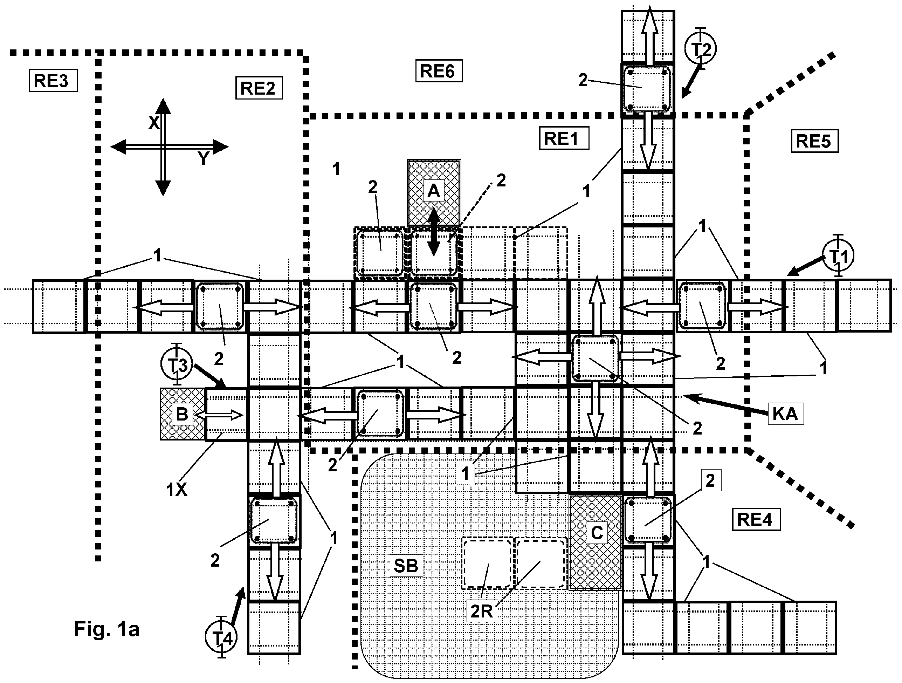

In **Figur 1** ist dargestellt, wie untereinander identische rechteckige Fahrwegmodule 1 beispielhaft in einem größeren Transport-Layout angeordnet werden können. Die Fahrwegmodule 1 sind als passive Elemente ausgebildet, so dass diese ohne eine Steuerung erfordernden Funktionselemente auskommen. Die Fahrwegmodule 1 sind in einem Raster schachbrettartig verlegbar und dabei an jeder Stelle des Transport-Layouts austauschbar verwendbar.

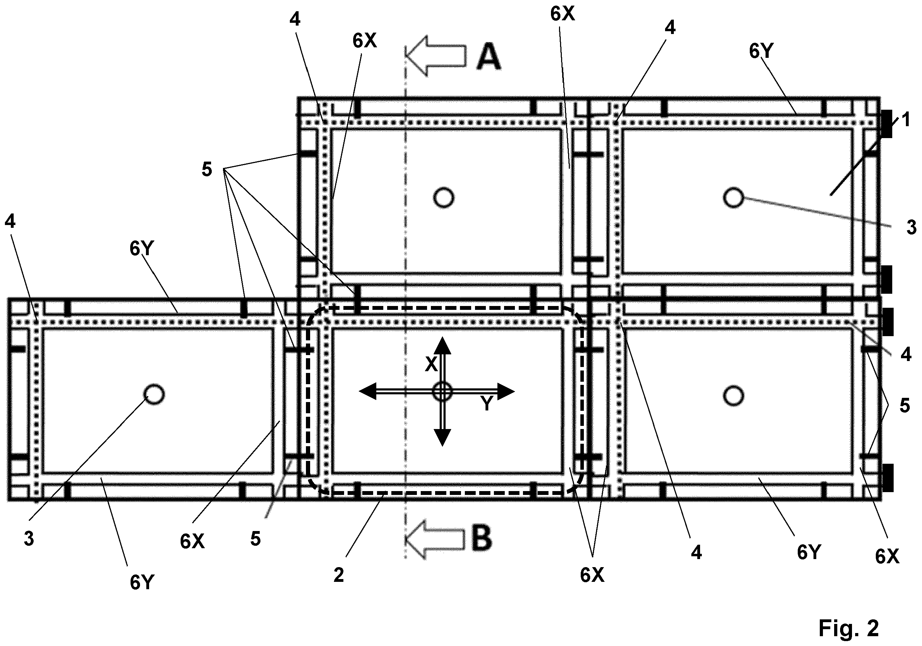

Die Fahrwegmodule 1 werden entsprechend einem vor dem Start einer Transportaufgabe geplanten Transport-Layout mittels Verbindungsstücken 5 (siehe dazu **Figuren 2 bis 4**) zusammengefügt. Die Verbindungsstücke 5 stellen eine form- und/oder kraftschlüssige Koppelung der einzelnen Fahrwegmodule 1 miteinander sicher. Die Koppelung der Fahrwegmodule 1 kann je nach Bedarf in beiden Orientierungsrichtungen der Transportebene in einer X- und einer Y-Richtung erfolgen. Auf den Fahrwegmodulen 1 werden die autonomen Transportfahrzeuge 2 aufgesetzt und können jedes der Fahrwegmodule 1 befahren.

In das Transport-Layout können weitere Module zur Steuerung und zum Management des Transportsystems einbezogen sein. Ein Lademodul A kann zum Aufladen von Hochleistungsbatterien auf den Transportfahrzeugen 2 verwendet werden. Ein Versorgungsmodul B kann zur Stromzufuhr oder zur datentechnischen Versorgung des Transportsystems dienen. Ein Servicemodul C kann zum Ausparken, zur Wartung und zum Einfahren von Transportfahrzeugen 2 auf das Transportsystem verwendet werden. Das Versorgungsmodul B kann entfallen, wenn das Lademodul zusätzlich die Stromzufuhr zur Stromleitern übernimmt und die datentechnische Verbindung zu den Transportfahrzeugen 2 etwa per W-LAN hergestellt wird.

In **Figur 1a** ist im Unterschied zu **Figur 1** dargestellt, wie untereinander identische quadratische Fahrwegmodule 1 beispielhaft in einem größeren Transport-Layout angeordnet werden können. Die Fahrwegmodule 1 sind wieder als passive Elemente ohne eine Steuerung erfordernde Funktionselemente ausgebildet und sind in einem Raster verlegbar. Die Fahrwegmodule 1 sind dabei an jeder Stelle des Transport-Layouts austauschbar verwendbar und können so ein heterogenes Transport-Layout bilden, wie es hier gezeigt ist.

Die Fahrwegmodule 1 werden auch hier entsprechend einem vor dem Start einer Transportaufgabe geplanten Transport-Layout mittels Verbindungsstücken 5 (siehe dazu **Figuren 2 bis 4**) zusammengefügt, die eine form- und/oder kraftschlüssige Koppelung der Fahrwegmodule 1 sichern. Die Koppelung der Fahrwegmodule 1 kann je nach Bedarf in beiden Orientierungsrichtungen der Transportebene in einer X- und einer Y-Richtung erfolgen.

Das Transport-Layout erstreckt sich hier beispielhaft über sechs Raumeinheiten RE1 bis RE6, die von Fahrwegmodulen 1 auf Transportstrecken T1 bis T4 durchzogen sind und von den autonomen Transportfahrzeuge 2 sämtlich befahren werden können.

Die Transportstrecke T1 durchzieht das Transport-Layout horizontal durch die Raumeinheiten RE1, RE2, RE3 und RE5. Sie kreuzt dabei die Transportstrecke T2 in einem von mehreren Fahrwegmodulen 1 gebildeten Kreuzungs- und Ausweichbereich KA.

Die Transportstrecke T2 durchzieht das Transport-Layout vertikal durch die Raumeinheiten RE1, RE4 und RE6. Sie kreuzt dabei die Transportstrecke T2 in dem von mehreren Fahrwegmodulen 1 gebildeten Kreuzungs- und Ausweichbereich KA und knickt am unteren Ende nach rechts ab.

Die Transportstrecke T3 verbindet als systeminterne Linie den Kreuzungs- und Ausweichbereich KA mit der weiteren Transportstrecke T4, die vertikal von der Transportstrecke T1 abzweigt.

Die Transportstrecken T1, T2 und T4 können Verbindungslinien zu logistischen Zielen außerhalb des dargestellten Transport-Layouts darstellen, zwischen denen daher variable Stückgüter abholbar und anlieferbar sind.

In das Transport-Layout sind hier ebenfalls ein Lademodul A, ein Versorgungsmodul B und ein Servicemodul C in das Transportsystem einbezogen.

Das Lademodul A zum Aufladen der Hochleistungsbatterien auf den Transportfahrzeugen 2 ist in einem zentralen Bereich des Transport-Layouts an der Transportstrecke 1 mit mehreren, dem Andockbereich am Lademodul A zugeordneten (strichliiert gezeigt) Parkpositionen angeordnet.

Das Versorgungsmodul B zur Stromzufuhr und datentechnischen Versorgung des Transportsystems ist an irgendeiner beliebigen Stelle des Transportsystems über ein Koppelmodul 1X entsprechend leitend an ein Fahrwegmodul 1 angedockt. Hier ist das Versorgungsmodul B an der Transportstrecke T4 angeordnet. Das Versorgungsmodul B kann entfallen, wenn das Lademodul zusätzlich die Stromzufuhr zur Stromleitern übernimmt und die datentechnische Verbindung zu den Transportfahrzeugen 2 etwa per W-LAN hergestellt wird.

Das Servicemodul C zum Ausparken, zur Wartung und zum Einfahren von Transportfahrzeugen 2 auf das Transport-Layout ist mit einer Struktur zur Bevorratung von Reserve-Transportfahrzeugen 2R versehen und in einem Randbereich des Transport-Layouts angedockt, der für Servicepersonal auch außerhalb der Transportwege kontinuierlich erreichbar ist. Hier ist das Servicemodul C mit einem Servicebereich SB dem Kreuzungs- und Ausweichbereich KA und der Transportstrecke T2 zugeordnet.

Die Darstellung nach **Figur 1a** ist beispielhaft zu sehen, wobei die flexiblen Konfigurationsmöglichkeiten in einem vorgegebenen Raumzusammenhang mit unterschiedlichsten logistischen Aufgabenstellungen deutlich gemacht werden.

Alternativ kann an definierten Fahrwegmodulen (1) eine induktive Batterieladefunktion integriert werden damit die Shuttles automatisch während des Fahrbetriebs bei einem Betriebshalt oder bei anderweitigem darauf stehen oder beim Überfahren zyklisch nachgeladen werden können. Es ist auch möglich am Rand eines Fahrweg-Layouts, beispielsweise im Bereich der Servicestation C, eine Batterie-Wechselstation zu integrieren.

In **Figur 2** ist ein kleines Transport-Layout mit fünf rechteckigen Fahrwegmodulen 1 gezeigt. Jedes Fahrwegmodul 1 ist mit je zwei Fahrspuren 6X und 6Y ausgerüstet, die rechtwinklig zueinander und jeweils parallel zu den Seitenkanten des Fahrwegmoduls 1 angeordnet sind. Jedes Fahrwegmodul 1 ist an jeder Seite mit Befestigungselementen versehen, die mit Befestigungselementen eines zweiten Fahrwegmoduls 1 koppelbar sind. Die Befestigungselemente sind als Verbindungsstücke 5 bezeichnet und so ausgebildet, dass die Fahrwegmodule 1 kraft- und/oder formschlüssig miteinander koppelbar sind. Die form- und/oder kraftschlüssigen Verbindungselemente zwischen den Fahrwegmodulen 1 sind so gestaltet, dass einzelne Fahrwegmodule 1 innerhalb eines Layouts nach oben entnommen werden können. Die Verbindungsstücke 5 können zur passiven Durchleitung von elektrischer Energie oder Daten verwendet werden.

In einer Ausführungsvariante, die in **Figur 2** mit dargestellt ist, kann eine induktive Stromzuführung für den Betrieb der autonomen Transportfahrzeuge 2 vorgesehen sein. Zur Anordnung einer induktiven Stromzuführung sind in den Fahrwegmodulen 1 entsprechende elektrisch aktivierbare Stromleiter 4 integriert. Die Stromleiter 4 werden beim Zusammenfügen der einzelnen Fahrwegmodule 1 automatisch miteinander verbunden, so dass ein Lade- oder Fahrstrom beim Einspeisen von einem ersten Fahrwegmodul 1 zu einem zweiten Fahrwegmodul 1 durchgeleitet werden kann.

Die Stromleiter 4 können in X- und Y-Richtung jeder Fahrspur 6X, 6Y oder nur einer Fahrspur 6 zugeordnet sein.

Auf jedem der Fahrwegmodule 1 ist weiterhin ein Codeelement 3 vorgesehen, das zur Identifikation des Fahrwegmoduls 1 und im Zusammenhang damit zur Fahrwegkonfiguration auf einem Transport-Layout benutzt werden können. In **Figur 2** ist das Codeelement 3 jeweils zentrisch am Fahrwegmodul 1 angeordnet und kann mittels einer Sensorik 12 am Transportfahrzeug 2 ausgelesen werden.

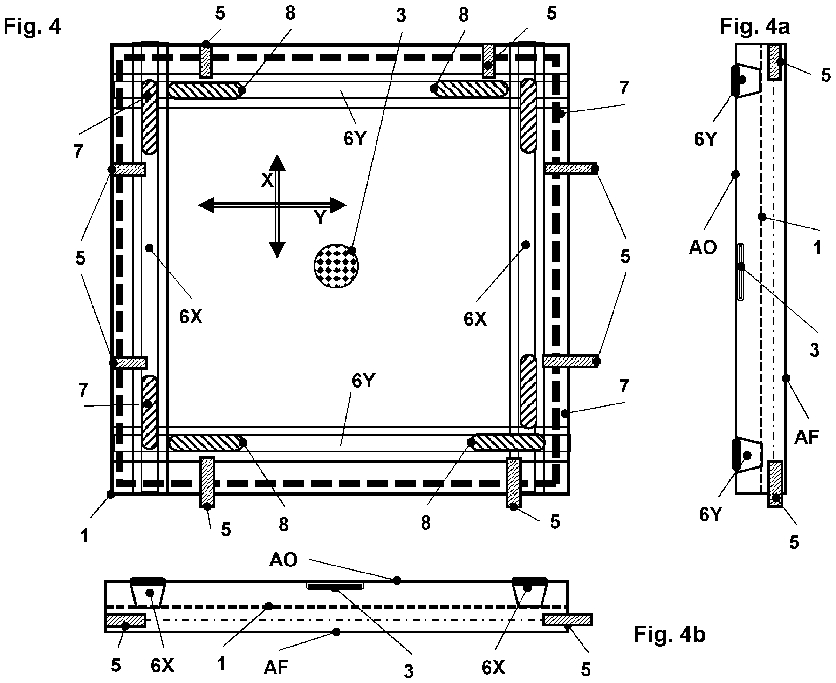

Wenn die Fahrwegmodule 1 auf der Basis einer Rahmenkonstruktion (siehe Beschreibung zu **Fig. 4**) ausgeführt sind, ist das entsprechende Codeelement 3 mit der Codierung in einem der Teile des Rahmens untergebracht für die Sensorik 12 der Transportfahrzeuge 2 erfassbar.

Die Fahrwegmodule 1 können zur Herstellung des Transport-Layouts auf eine Bodenfläche, eine existierende Lager- oder Transportfläche oder mittels einer Unterbau-Stützkonstruktion etwa auf einer standardisierten Arbeitshöhe bereits existierenden Logistik-Fläche zugeordnet montiert werden.

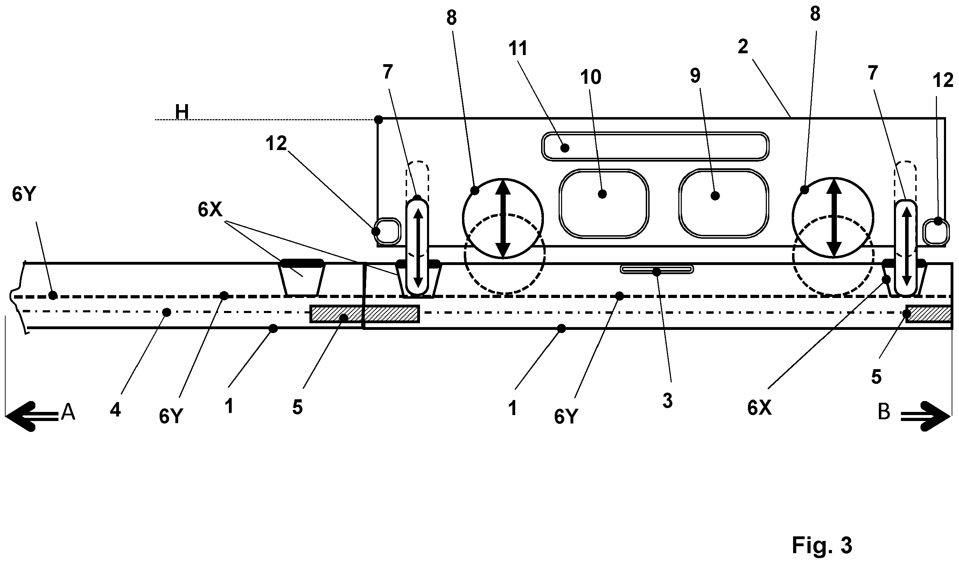

In **Figur 3** sind zwei miteinander gekoppelte Fahrwegmodule 1 und ein darauf in den Fahrspuren 6X stehendes Transportfahrzeug 2 im Aufriss in Längsrichtung parallel zur Y-Achse bzw. parallel zu den Fahrspuren 6Y dargestellt.

Diese Zeichnung ist von der Schnittlinie A-B in **Figur 2** abgeleitet und am Rand des links dargestellten Fahrwegmoduls 1 aus Darstellungsgründen abgeschnitten.

Die Fahrspuren 6X sind im Querschnitt dargestellt. Die Fahrspuren 6Y sind mittels einer strichliierten Linie am Boden der Fahrspur dargestellt.

Die Fahrwegmodule 1 sind mittels symbolisch dargestellter Verbindungsstücke 5 gekoppelt. Auch an den freien Enden der Fahrwegmodule 1 sind links und rechts ebenfalls Verbindungsstücke 5 angedeutet, die zum Ankoppeln von weiteren Fahrwegmodulen 1 vorgesehen sind. Weiterhin ist als Strich-Punkt-Linie der optionale Stromleiter 4 angedeutet. Dieser kann separat geführt werden oder über die Verbindungsstücke 5 zwischen zwei Fahrwegmodulen 1 gekoppelt werden.

Auf dem Verbund der Fahrwegmodule 1 können sich die einzelnen Transportfahrzeuge 2 autonom in X- und Y-Richtung (siehe **Figur 1** **und** **2**) bewegen. Die Transportfahrzeuge 2 sind dazu jeweils mit zwei Fahrantrieben und wenigstens einem Hubantrieb ausgestattet. Ein erster Fahrantrieb weist vier erste Antriebs- oder Laufräder 7 auf und bewegt das Transportfahrzeug 2 in einer X-Richtung des Transport-Layouts. Ein zweiter Fahrantrieb weist vier zweite Antriebs- oder Laufräder 8 auf und bewegt das Transportfahrzeug 2 in einer Y-Richtung des Transport-Layouts. In jedem Fall können eines oder mehrere der Räder 7, 8 einzeln, achsenweise oder insgesamt von einem oder mehreren Antriebsmotoren angetrieben werden.

Der oder die hier nicht dargestellten Hubantriebe sorgt/sorgen dafür, dass immer diejenigen Lauf- oder Antriebsräder 7, 8 in Fahrspuren 6X oder 6Y auf dem Fahrwegmodul 1 aufliegen, die der Fahrtrichtung zugeordnet sind, in die das Transportfahrzeug 2 auf dem Transport-Layout fahren soll.

Wenn also etwa das Transportfahrzeug 2 in X-Richtung fahren soll, werden die Antriebs- oder Laufräder 8 für die Y-Richtung mittels eines zugeordneten Hubantriebs in einen angehobenen Zustand verbracht, wie dies auch in **Figur 3** dargestellt ist. Die Antriebs- oder Laufräder 7, die in X-Richtung ausgerichtet sind, sind dabei abgesenkt und fahren in den Fahrspuren 6X des hier rechts dargestellten Fahrwegmoduls 1. Bei einer in Y-Richtung gewünschten Bewegung werden dagegen die Antriebs- oder Laufräder 7, die in X-Richtung ausgerichtet sind, mit einem entsprechenden Hubantriebs in eine angehobene Position gebracht (s. strichliierte Darstellung der Laufräder 7 in **Figur 3**). Dann werden die Antriebs- oder Laufräder 8 für die Y-Richtung abgesenkt und laufen in den Fahrspuren 6Y auf dem Fahrwegmodul 1 (s. strichliierte Darstellung der Laufräder 8 in **Figur 3**).

Eine derart ausgerüstete Anordnung hat den Vorteil, dass die Transportlage der Oberfläche des Transportfahrzeugs 2 sich in jeder Betriebsart auf einer gleichen Arbeitshöhe H befinden kann.

Alternativ ist nur ein erstes Fahrwerk, etwa für die ersten Antriebs- oder Laufräder 7, für eine erste Fahrtrichtung mit einem Hubantrieb versehen ist, während das zweite Fahrwerk, etwa das für die zweiten Antriebs- oder Laufräder 8, für eine zweite Fahrtrichtung starr am Gehäuse des Transportfahrzeuges 2 befestigt ist.

So können in einem ersten Betriebsfall die ersten Antriebs- oder Laufräder 7 des ersten Fahrwerkes in die Fahrspuren 6X eingesetzt werden. Dabei wird gleichzeitig das zweite Fahrwerk mit den zweiten Antriebs- oder Laufrädern 8 von den Fahrspuren 6Y im Fahrwegmodul 1 abgehoben. So wird das Transportfahrzeug 2 insgesamt von dem ersten Fahrwerk angehoben und kann in der ersten Fahrtrichtung bewegt werden.

Im zweiten Betriebsfall wird das erste Fahrwerk vom Hubwerk eingezogen bis das Transportfahrzeug 2 mit dem zweiten Fahrwerk (Antriebs- / Laufräder 8) in den Fahrspuren 6Y aufsetzt und kann mit eingezogenem erstem Fahrwerk in der zweiten Fahrtrichtung bewegt werden. Im zweiten Betriebsfall befindet sich die Arbeitsfläche des Transportfahrzeuges 2 auf einem niedrigeren Niveau als im ersten Betriebsfall.

Jedes autonome Transportfahrzeug 2 ist mit einem Energiesystem 9 ausgerüstet. Dieses kann aus Hochleistungsbatterien oder einer Stromaufnahme von einem im Fahrwegmodul 1 verlegten induktiven Stromleiter 4 bestehen. Für die Hochleistungsbatterien ist eine Ladestation (Lademodul A) vorgesehen.

Zur Steuerung der Fahrbewegung und der Navigation des Transportfahrzeugs 2 ist ein integrierter Steuerrechner 10 vorgesehen, der aus Steuerdaten die Antriebe der Fahrwerke und Hubwerke steuert.

Die Steuerdaten und Navigationsinformationen werden über eine Einrichtung zur drahtlosen Kommunikation 11 (WLAN, Bluetooth, NFC) an das Transportfahrzeug 2 und den Steuerrechner 10 übermittelt.

Schließlich wird mittels eines oder mehrerer Sensoren 12 der Inhalt des Codeelements 3 während der Transportfahrt ausgelesen und kann für die Auswahl der Betriebsarten oder das Navigieren verwendet werden.

Für jedes der Transportfahrzeuge 2 ist in einem Speicher des jeweiligen integrierten Steuerrechners 10 ein spezifischer Identifikationscode (Adresse des Transportfahrzeugs 2) hinterlegt. Damit kann vorgesehen sein, dass die Navigation im Transport-Layout drahtlos erfolgt, etwa über eine WLAN-Einrichtung, Bluetooth oder NFC, dabei direkt oder indirekt mit anderen im Transportsystem fahrenden Transportfahrzeugen 2 und gleichzeitig auch mit einem übergeordneten Steuerungssystem erfolgt.

Bei Bedarf können auf den Transportfahrzeugen 2 zusätzlichen Logistik-Funktionen vorgesehen sein. So kann eine Hubeinheit zum Ausheben von Lagerobjekten aus Lagerplätzen oder zum Absetzen der Lagerobjekte auf anderen Niveaus verwendet werden. Eine Kippschale kann zum Aufnehmen und Verteilen von Fördergütern verwendet werden. Endlosförderer mit Förderbändern oder Förderketten können zum einfachen Abschieben von Lagerobjekten innerhalb eines im Wesentlichen identischen Niveaus verwendet werden.

Antriebe dieser Zusatzfunktionen können mittels der auf dem Transportfahrzeug 2 im Energiesystem 9 verfügbaren Energie angetrieben und mittels des bordeigenen Steuerrechners 10 (Controller) gesteuert werden. Hierfür benötigte Daten werden über die drahtlosen Kommunikation 11 und von den Sensoren 12 sowie von einem übergeordneten Steuerungssystem des Transportsystems herangezogen und nach Bedarf in die Steuerungsabläufe einbezogen.

In **Figur 4** ist beispielhaft ein quadratisch ausgebildetes Fahrwegmodul 1 detaillierter in Draufsicht dargestellt. Das quadratische oder ggf. auch rechteeckige Fahrwegmodul 1 (siehe auch **Figuren 1** **und** **2**) ist in X-Richtung mit zwei Fahrspuren 6X versehen, die jeweils parallel zu den in X-Richtung verlaufenden Rändern des Fahrwegmoduls 1 angeordnet sind. Das Fahrwegmodul 1 ist weiterhin in Y-Richtung mit zwei Fahrspuren 6Y versehen, die jeweils parallel zu den in Y-Richtung verlaufenden Rändern des Fahrwegmoduls 1 angeordnet sind.

Die Grundkonstruktion kann als stabile Platte, als Scheibe, als Rahmen oder auch als längs erstreckbare und ggf. auf- und abwickelbar strukturierte Kunststoff- oder Metallfolienanordnung bzw. Kunststoff- oder Metallbandanordnung ausgebildet sein. Bei einer Ausbildung des Fahrwegmoduls 1 als Platte oder Scheibe sind die jeweils zwei Fahrspuren 6X, 6Y parallel zu je einer Seitenkante des Fahrwegmoduls 1 als im Querschnitt trapezförmige Nuten in das Plattenmaterial abgeformt. Eine Platte weist Vorteile hinsichtlich der Eigenstabilität des Fahrwegmoduls 1 auf.

Bei einer Ausbildung des Fahrwegmoduls 1 als Rahmen sind die jeweils zwei im Querschnitt trapezförmige Fahrspuren 6X, 6Y jeweils mittig in jedem der wenigstens vier Rahmenteile abgeformt. Der Bereich zwischen den Rahmenteilen mit den Fahrspuren 6X, 6Y bleibt so offen. Eine Ausführung als Rahmen weist Vorteile hinsichtlich von solchen Anwendungen auf, bei denen Durchgriffe durch die Transportebene der Fahrwegmodule 1 erforderlich oder erwünscht sind.

Bei einer Ausbildung eines auf- und abwickelbar konzipierten Fahrwegmoduls 1 als Kunststoff- oder Metallfolien- oder -bandanordnung sind ggf. nur zwei Fahrspuren 6X, 6Y parallel zu je einer Seitenkante des Fahrwegmoduls 1 als im Querschnitt trapezförmige Nuten in das Plattenmaterial abgeformt. Mit einem derartigen Fahrwegmodul 1 aus ein Kunststoff- oder Metallfolien- oder -bandanordnung kann leichter eine größere Transportentfernung überbrückt werden, wenn keine Abzweigungen zu weiteren Transportstrecken erforderlich sind. In diesem Fall sind die Verbindungsstücke 5 zu benachbarten Fahrwegmodulen 1 nur an den Endseiten des sich längs erstreckenden und als auf- und abwickelbare Kunststoff- oder Metallfolien- oder bandanordnung konfigurierten Fahrwegmoduls 1 angebracht. An den Längsrändern diese Fahrwegmoduls können aber auch an bestimmten Positionen Verbindungsstücke 5 zur Ankoppelung von benachbarten Fahrwegmodulen 1 vorgesehen sein.

Zu jeder Seitenkante des Fahrwegmoduls 1 hin sind je zwei Verbindungsstücke 5 angeordnet, mittels derer ein weiteres Fahrwegmodul 1 angekoppelt werden kann. Dabei überdecken sich die Fahrspuren 6X, 6Y jeweils exakt bündig mit korrespondierenden Fahrspuren in den benachbarten Fahrwegmodulen 1.

Im Mittelbereich des Fahrwegmoduls 1 ist ein Codeelement 3 zu Identifikation des Fahrwegmoduls 1 hinsichtlich seiner Lage angeordnet. Das Codeelement 3 ist optisch oder über drahtlose Datenverbindung auslesbar.

In der Ausführungsform mit als Rahmen können Codeelemente 3 auch zentrisch an jeder Rahmenseite des Fahrwegmoduls 1 vorgesehen werden.

In den Fahrspuren 6X ist die Lage der ersten Antriebs- oder Laufräder 7 des in X-Richtung verfahrenden Fahrwerks des Transportfahrzeugs 2 eingezeichnet.

In den Fahrspuren 6Y ist die Lage der zweiten Antriebs- oder Laufräder 8 des in Y-Richtung verfahrenden Fahrwerks des Transportfahrzeugs 2 eingezeichnet.

Die Umrisslinie eines Transportfahrzeuges 2 auf dem Fahrwegmodul 1 ist zur Verdeutlichung als strichliiertes Rechteck eingezeichnet.

In den **Figuren 4a** und **4b** sind Schnittdarstellungen eines Fahrwegmoduls 1 in X- und Y-Richtung gezeigt, so dass sich jeweils eine detaillierte Querschnittsdarstellung in jeder Richtung ergibt.

In **Figur 4a** ist der Schnitt durch das Fahrwegmodul 1 in X-Richtung dargestellt, so dass die beiden Fahrspuren 6Y quer zur X-Richtung im Schnitt zu sehen sind.

In **Figur 4b** ist der Schnitt durch das Fahrwegmodul 1 in Y-Richtung dargestellt, so dass die beiden Fahrspuren 6X quer zur Y-Richtung im Schnitt zu sehen sind.

Das Fahrwegmodul 1 kann hier auch in seinem Aufbau als stabile Platte, als Scheibe, als Rahmen oder auch als längs erstreckbare dicke und ggf. auf- und abwickelbar strukturierte Kunststoff- oder Metallfolien- oder bandanordnung erfasst werden. Die Auswahl der Ausbildungsform kann von den Einsatzbedingungen abhängig gemacht werden.

Da die Transportstrecken aus mehreren Fahrwegmodulen 1 aufgebaut werden, ist je nach Ebenheit und Stabilität des Untergrunds eine einfache, weniger steife Materialstruktur oder eine sehr stabile Materialstruktur einsetzbar.

Für den Logistikfachmann kommen dann an dieser Stelle als Auswahlkriterien grundlegende Überlegungen zu Kosten, Herstellbarkeit, Handhabbarkeit, Komplexität des Aufbaus und Verbindungssteifigkeit zum Tragen. Weiterhin werden auch Vorgaben der Dauerhaltbarkeit und Anforderungen bezüglich der Häufigkeit eines Neuaufbaus oder von Restrukturierungen des Transport-Layouts in Betracht gezogen.

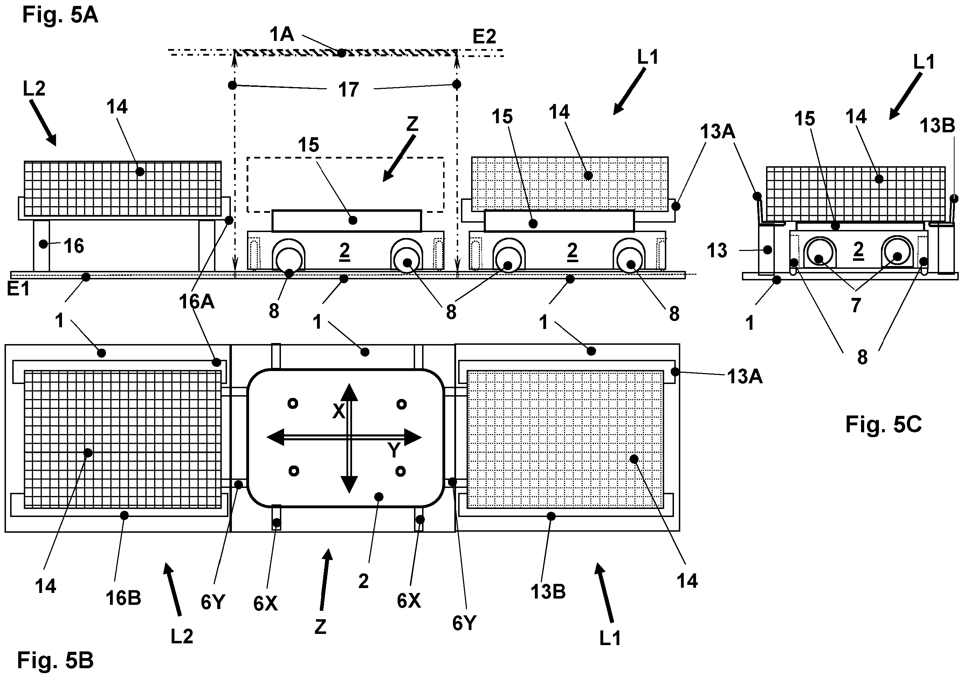

In den **Figuren 5A, 5B und 5C** ist ein Funktionsablauf in einem Transportsystem vereinfacht dargestellt. Ein Transportfahrzeug 2 ist auf einem Transport-Layout mit einem Fahrweg über drei Fahrwegmodule 1 verfahrbar.

Eine erste Lagerposition L1 bei einem ersten Fahrwegmodul 1 ist zur Aufnahme/Abgabe eine Lagerobjekts 14 von oder zu einem Lagergestell 13 vorgesehen, wobei dieses aus zwei parallelen Lagerschienen 13A, 13B bestehen kann.

Ein zweites Fahrwegmodul 1 in der Mitte der Anordnung ist zur Verknüpfung in X-Richtung nach oben und/oder unten über weitere Fahrwegmodule 1 mit weiteren Lagerpositionen parallel zur gezeigten Anordnung geeignet.

Eine zweite Lagerposition L2 bei einem dritten Fahrwegmodul 1 ist zur Abgabe/Aufnahme eine Lagerobjekts 14 zu oder von einem Lagergestell 16 vorgesehen, wobei dieses wiederum aus zwei parallelen Lagerschienen 16A, 16B bestehen kann.

In **Figur 5A** ist die Anordnung im Aufriss gezeigt. Hierbei ist auch eine Erweiterung des Transportsystems von einer ersten Ebene E1 auf eine zweite Ebene E2 angedeutet. Damit kann das Transport-Layout mittels eines vertikal verlagerbaren Fahrwegmoduls 1A über ein Liftmodul 17 erweitert werden. Das Liftmodul 17 ist dabei in der Lage, das vertikal verlagerbare Fahrwegmodul 1A allein oder mit einem aufsitzenden Transportfahrzeug 2 zwischen den beiden Transportebenen Ebene E1 und Ebene E2, ggf. auch in beliebig vielen Transportebenen, zu versetzten. Die Ankoppelung zwischen den Fahrwegmodulen 1 in Ebene 1 und Ebene 2 mit dem vertikal verlagerbaren Fahrwegmodul 1A erfolgt automatisch.

In **Figur 5B** ist die Anordnung in der Draufsicht gezeigt.

In **Figur 5C** ist die Anordnung stirnseitig zur Lagerposition L1 im Aufriss gezeigt.

In der Lagerposition L1 ist ein Transportfahrzeug 2 dargestellt, das dort auf den zweiten Lauf- oder Antriebsrädern 8 in Y-Richtung eingefahren wurde. Die ersten Lauf- oder Antriebsrädern 7 für die X-Richtung sind angehoben. Auf dem Transportfahrzeug 2 ist über ein Hubelement 15 ein Lagerobjekt 14 angeordnet. Dabei ist das Hubelement 15 auf der Oberseite des Transportfahrzeuges 2 befestigt und kann mit einer Arbeitsfläche das Lagerobjekt 14 gegenüber dem Transportfahrzeug 2 anheben. Die Darstellung zeigt in **Figur 5A** rechts das Lagerobjekt 14 in angehobenem Zustand und in **Figur 5C** im auf die Lagerschienen 13A und 13B abgesenkten Zustand.

In den **Figuren 5A und 5B** steht oder fährt in einer Zwischenposition Z zwischen den beiden Lagerpositionen L1 und L2 ein unbeladenes Transportfahrzeug 2 mit leerem Hubelement 15 auf dem mittleren Fahrwegmodul 1. In dieser Situation in **Figur 5A** ist das Hubelement 15 des Transportfahrzeugs 2 nach oben ausgefahren dargestellt.

In der linken Lagerposition L2 ist das Lagerobjekt 14 auf den Lagerschienen 16A, 16B des Lagergestelles 16 abgesetzt. So kann man davon ausgehen, dass mittels des Transportfahrzeuges 2, das sich gerade auf dem mittleren Fahrwegmodul 1 befindet, das Lagerobjekt 14 auf dem Lagergestell 16 abgesetzt worden ist oder dass das Lagerobjekt 14 von dem Lagerstell 16 abgeholt werden soll.

Wenn an dem mittleren Fahrwegmodul 1 in X-Richtung oben und unten in der Darstellung nach **Figur 5B** weitere Fahrwegmodule 1 angeschlossen werden, können weitere derartige Lagerkonfigurationen auf sehr einfache Weise aufgebaut werden. Ebenso kann eine solche Anordnung auf einem Transport-Layout mit einem größeren Feld mit Fahrwegmodulen 1 eingerichtet werden.

Dabei kann die Zuordnung von Vorrichtungen für Lagergestelle 13, 16 zu den Fahrwegmodulen 1 oder deren Verbindung mit den Fahrwegmodulen 1 ebenso standardisiert werden, wie dieses bereits für die Koppelung der Fahrwegmodule 1 untereinander vorgesehen ist.

Der besondere Vorteil des beschriebenen Transportsystems besteht darin, dass sich aus einer sich ergänzenden Funktionalität zwischen autonomen intelligenten Transportfahrzeugen 2 und sehr einfachen flurebenen und passiven Fahrwegmodulen 1 neue Anwendungsmöglichkeiten für beliebig konfigurierbare Logistik-Layouts in vorhandenen Produktions- und Handling-Umgebungen darstellen lassen. Dadurch können neue und bereits bestehende Transportsysteme in beliebiger Weise beliebig skalierbar, hoch flexibel und in kurzer Zeit realisiert werden.

### Bezugszeichenliste

- 1: Fahrwegmodul
- 1A: vertikal verlagerbares Fahrwegmodul
- 1X: Koppelmodul
- 2, 2R: Transportfahrzeug / Reserve-Transportfahrzeug
- 3: Codeelement
- 4: Strom leiter
- 5: Verbindungsstücke zur Koppelung der Fahrwegmodule 1
- 6X: Fahrspur: 2-spurig in X Richtung)
- 6Y: Fahrspur: 2-spurig in Y Richtung)
- 7: erste Lauf- oder Antriebsräder des ersten Fahrwerks (X-Richtung
- 8: zweite Lauf- oder Antriebsräder des zweiten Fahrwerks (Y-Richtung
- 9: Energiesystem
- 10: Steuerrechner
- 11: drahtlose Kommunikation
- 12: Sensor (für Codeelement 3)
- 13, 16: Lagergestelle
- 13, 13A, 13B: Lagerschiene
- 14: Lagerobjekt
- 15: Hubelement
- 16, 16A, 16B: Lagerschiene
- A: Lademodul
- AO: Arbeitsoberfläche
- AF: Auflagefläche
- B: Versorgungsmodul
- C: Servicemodul
- E1, E2: erste, zweite Transportebene
- H: Arbeitshöhe
- L1, L2: erste, zweite Lagerposition
- RE1 - RE6: Raumeinheit 1 bis 6
- SB: Servicebereich
- T1 -T4: Transportstrecke 1 bis 4
- Z: Zwischenposition

## Patentansprüche

1. Transportsystem bestehend aus wenigstens einem, vorzugsweise mehreren autonom und selbstfahrend ausgebildeten Transportfahrzeugen (2) und weiterhin einer Mehrzahl von untereinander in einer Transportebene (T1, T2) koppelbar angeordneten Fahrwegmodulen (1),
wobei jedes der Fahrwegmodule (1) aus einem sich im Wesentlichen zweidimensional innerhalb einer Transportebene (T1, T2) erstreckenden eine Auflagefläche (AF) und eine Arbeitsoberfläche (AO) aufweisenden Körper besteht,
wobei die Arbeitsoberfläche (AO) wenigstens ein Paar im Querschnitt dreidimensional geformte Fahrspuren (6X, 6Y) aufweist, die in einer oder beiden von rechtwinklig zueinander ausgerichteter Fahrtrichtungen (X, Y) angeordnet sind,
wobei die Fahrwegmodule (1) als quadratische oder rechteckige Platten oder Rahmen ausgebildet sind, die ein oder mehrere Paare von Fahrspuren (6X, 6Y) in einer Richtung oder in zwei rechtwinklig zueinander orientierten Richtungen (X, Y) parallel zu den Seitenkanten der Platten bzw. Rahmen aufweisen,
wobei die Fahrwegmodule (1) in X- und/oder Y-Richtung form- und/oder kraftschlüssig miteinander verbunden sind,
wobei die Transportfahrzeuge (2) unter Kontaktierung wenigstens eines Teils der Fahrspuren (6X, 6Y) mit den Fahrwegmodulen (1) in Verbindung stehen, und wobei jedem Fahrwegmodul (1) ein Kennzeichnungselement mit einer jedem der Transportfahrzeuge (2) zuordenbaren Codierung enthalten ist, **dadurch gekennzeichnet, dass**:
die Fahrspuren (6X, 6Y) die Form von im Querschnitt trapezförmigen Nuten aufweisen,
und wobei ein Fahrwegmodul (1) nur durch ein einzelnes Transportfahrzeug (2) befahrbar ist.

2. Transportsystem nach Anspruch 1, **dadurch gekennzeichnet,**
**dass** an jedem Transportfahrzeuges (2) zum Tragen und Bewegen auf einer von den Fahrwegmodulen (1) gebildeten Fahrbahn je zwei wechselweise aktivierbare Fahrwerken mit jeweils wenigstens vier Antriebs- oder Laufrädern (7, 8) vorgesehen sind, wobei jedes der Fahrwerke einer der rechtwinklig zueinander ausgerichteten Fahrtrichtungen (X, Y) zugeordnet ist und mit jedem Fahrwerk wenigstens eine der linear oder rechtwinklig zueinander ausgerichteten Fahrspuren (6X, 6Y) befahrbar ist, welche auf einer Vielzahl von separaten und miteinander koppelbaren Fahrwegmodulen (1) angeordnet sind.

3. Transportsystem nach einem oder mehreren der Ansprüche 1 bis 2,
**dadurch gekennzeichnet, dass** das Kennzeichnungselement jedes Fahrwegmoduls (1) ein Codeelement (3) mit individueller passiver Codierung, wie einem RFID-Tag oder einem QR-Code, ist, dessen Informationsinhalt zur Orientierung der Transportfahrzeuge (2) bei der Navigation in dem Transportsystem dient.

4. Transportsystem nach einem oder mehreren der Ansprüche 1 bis 3,
**dadurch gekennzeichnet, dass**
die Fahrwegmodule (1) als passive Platten oder Rahmen ausgebildet sind, die wechselseitig mittels aufeinander abgestimmter Verbindungsstücke (5) mechanisch miteinander verbunden und verriegelt werden und
dass die Fahrwegmodule (1) direkt auf dem Boden oder auf einer beliebigen Unterkonstruktion befestigt werden, derart dass Änderungen eines Transport-Layouts durch Hinzufügen oder Entnehmen von Fahrwegmodulen (1) in X- und/oder Y- Richtung erfolgen kann.

5. Transportsystem nach einem oder mehreren der Ansprüche 1 bis 4,
**dadurch gekennzeichnet, dass** die Transportfahrzeuge (2) mit Hochleistungsbatterien versehen sind, die im Transportsystem aufladbar sind und dass die Fahrwegmodule (1) ohne Verkabelung ausgeführt sind.

6. Transportsystem nach einem oder mehreren der Ansprüche 1 bis 5,
**dadurch gekennzeichnet, dass**
die Transportfahrzeuge (2) mit induktiven Energieaufnahmeeinrichtungen versehen sind, die mit induktiven Stromleitern (4), die modular zur Stromdurchleitung durch die Fahrwegmodule (1) geführt sind, zusammenwirken.

7. Transportsystem nach einem oder mehreren der Ansprüche 1 bis 6,
**dadurch gekennzeichnet, dass**
die Transportfahrzeuge (2) so ausgebildet sind, dass ihnen bei Anpassung an ein neues Transport-Layout oder bei Änderung eines bestehenden Transport-Layouts mittels drahtloses Informationsübertragung, wie über WLAN, die jeweils aktuelle Anordnung und Codierung der Fahrwegmodule (1) anhand des Informationsinhalts der Codeelemente (3) übertragen wird.

8. Transportsystem nach einem oder mehreren der Ansprüche 1 bis 7,
**dadurch gekennzeichnet, dass** in Verbindung mit der Kombination der Fahrwegmodule (1) und der autonomen Transportfahrzeuge (2) durch Entnahme oder Hinzufügung von einzelnen oder mehreren Fahrwegmodulen (1) ein Transport-Layout mit erforderlichen Transportwegen innerhalb einer oder jeder Transportebene (T1, T2) in einer beliebigen neuen oder veränderten linearen, zweidimensional ebenen oder schachbrettmusterartigen Zuordnung aufbaubar sind.

9. Transportsystem nach einem oder mehreren der Ansprüche 1 bis 8,
das ausgebildet ist, um als Transportsystem zum Verlagern von Lagerobjekten (14) und/oder um als Puffersystem zum Zwischenspeichern von Lagerobjekten (14) genutzt zu werden.

10. Transportsystem nach einem oder mehreren der Ansprüche 1 bis 8,
das ausgebildet ist, um als Transportsystem zum dauerhaften Ein- und Auslagern von Lagerobjekten (14) und/oder um als Sortiersystem für die geordnete Verteilung von Lagerobjekten (14) genutzt zu werden.

## Claims

1. Transport system consisting of at least one, preferably several, autonomous and self-propelled transport vehicles (2) and furthermore a plurality of route modules (1) that can be coupled to one another on a transport level (T1, T2), each of the route modules (1) consists of a body which extends essentially two-dimensionally within a transport level (T1, T2) and has a support surface (AF) and a working surface (AO), wherein the working surface (AO) has at least one pair of cross-sectionally three-dimensionally shaped travel lanes (6X, 6Y), which are arranged in one or both of perpendicularly aligned directions of travel (X, Y), wherein the route modules (1) are designed as square or rectangular plates or frames that form one or more pairs of travel lanes (6X, 6Y) in one direction or in two directions (X, Y) oriented at right angles to one another parallel to the side edges of the plates or frames, wherein the route modules (1) are connected form-fit and/or force-fit to one another in the X and/or Y direction, wherein the transport vehicles (2) are connected to the route modules (1) by contacting at least some of the travel lanes (6X, 6Y), and wherein each route module (1) contains an identification element with a coding that can be assigned to each of the transport vehicles (2),
**characterized in that**: the travel lanes (6X, 6Y) are in the form of notches with a trapezoidal cross section, wherein one route module (1) is only being able to be driven on by a single transport vehicle (2).

2. Transport system according to claim 1, **characterized in that** each transport vehicle (2) is provided with two alternately activatable running gears, each with at least four drive or running wheels (7, 8), for carrying and moving on a guideway formed by the route modules (1), wherein each of the running gears is being assigned to one of the directions of travel (X, Y) aligned at right angles to one another and where with each running gear at least one of the travel lanes (6X, 6Y) aligned linearly or at right angles to one another can be driven on, where the travel lanes (6X, 6Y) are arranged is on a large number of separate and jointly connectable route modules (1).

3. Transport system according to one or more of claims 1 to 2, **characterized in that** the identification element of each route module (1) is a code element (3) with individual passive coding, such as an RFID tag or a QR code, the information content of which helps to orient the transport vehicles (2) used for navigation in the transport system.

4. Transport system according to one or more of claims 1 to 3, **characterized in that** the route modules (1) are designed as passive panels or frames which are mutually mechanically connected and locked to one another by means of matching connecting pieces (5) and that the route modules (1) are fastened directly to the floor or to any substructure, such that changes to a transport layout can be made by adding or removing route modules (1) in the X and/or Y direction.

5. Transport system according to one or more of claims 1 to 4, **characterized in that** the transport vehicles (2) are provided with high-performance batteries that can be charged in the transport system and that the route modules (1) are designed without cabling.

6. Transport system according to one or more of claims 1 to 5, **characterized in that** the transport vehicles (2) are provided with inductive energy absorption devices which interact with inductive current conductors (4) which are guided in a modular manner through the route modules (1) in order to conduct current.

7. Transport system according to one or more of claims 1 to 6, **characterized in that** the transport vehicles (2) are designed in such a way that in case of adapting them to a new transport layout or in case of changing of an existing transport layout the current arrangement and coding of the route modules (1) is transmitted to them by means of wireless information transmission, such as via WLAN, based on the information content of the code elements (3).

8. Transport system according to one or more of claims 1 to 7, **characterized in that** in connection with the combination of the route modules (1) and the autonomous transport vehicles (2) by removing or adding one or more route modules (1), a transport layout with the necessary transport routes within one or each transport level (T1, T2) can be built up in any new or changed linear, two-dimensional plane or chessboard-like assignment.

9. Transport system according to one or more of claims 1 to 8, which is designed to be used as a transport system for relocating storage objects (14) and/or as a buffer system for temporarily storing storage objects (14).

10. Transport system according to one or more of claims 1 to 8, which is designed to be used as a transport system for the permanent storage and retrieval of storage objects (14) and/or as a sorting system for the orderly distribution of storage objects (14).

## Revendications

1. Système de transport composé d'au moins un, de préférence plusieurs, véhicules de transport (2) autonomes et autopropulsés et en outre d'une pluralité de modules d'itinéraire (1) pouvant être couplés les uns aux autres au niveau du transport (T1, T2), chacun des modules d'itinéraire (1) est constitué d'un corps qui s'étend essentiellement en deux dimensions à l'intérieur d'un niveau de transport (T1, T2) et présente une surface de support (AF) et une surface de travail (AO), dans lequel la surface de travail (AO) présente au moins une paire de voies (6X, 6Y) de forme tridimensionnelle en coupe transversale, qui sont agencées dans l'une ou les deux directions de déplacement (X, Y) alignées perpendiculairement, dans lequel les modules d'itinéraire (1) sont réalisés comme des plaques ou cadres carrés ou rectangulaires qui forment une ou plusieurs paires de voies (6X, 6Y) dans une direction ou dans deux directions (X, Y) orientées à angle droit l'une par rapport à l'autre parallèlement à les bords latéraux de l'ont des plaques ou des cadres, dans lequel les modules d'itinéraire (1) sont reliés en forme et/ou en force les uns aux les autres dans la direction X et/ou Y, dans lequel les véhicules de transport (2) sont reliés aux modules d'itinéraire (1) en contactant au moins certaines des voies (6X, 6Y), et dans lequel chaque module d'itinéraire (1) contient un élément d'identification avec un codage qui peut être attribué à chacun des véhicules de transport (2), **caractérisé en ce que**: les voies (6X, 6Y) sont en forme des rainures à section trapézoïdale, et dans lequel un module d'itinéraire (1) seulement pouvant être parcouru par un seul véhicule de transport (2).

2. Système de transport selon la revendication 1, **caractérisé en ce que** chaque véhicule de transport (2) est pourvu de deux trains roulants activables alternativement, chacun avec au moins quatre roues motrices ou roue de roulement (7, 8), pour porter et se déplacer sur une voie de guidage formée par les modules d'itinéraire (1), dans lequel chacun des trains roulant est affecté à l'une des directions de déplacement (X, Y) alignées à angle droit et dans lequel avec chaque train de roulement au moins l'une des voies (6X, 6Y) alignés linéairement ou à angle droit peuvent être parcouru, où les voies (6X, 6Y) sont agencées sur une pluralité de modules d'itinéraire (1) séparés et pouvant être reliés ensemble.

3. Système de transport selon une ou plusieurs des revendications 1 à 2, **caractérisé en ce que** l'élément d'identification de chaque module d'itinéraire (1) est un élément de code (3) à codage passif individuel, tel qu'une étiquette RFID ou un code QR, dont le contenu informatif aide à orienter les véhicules de transport (2) utilisés pour la navigation dans le système de transport.

4. Système de transport selon une ou plusieurs des revendications 1 à 3, **caractérisé en ce que** les modules d'itinéraire (1) sont conçus comme des panneaux passifs ou des cadres qui sont mutuellement reliés mécaniquement et verrouillés les uns aux autres au moyen de pièces de liaison (5) adaptées et **en ce que** les modules d'itinéraire (1) sont fixés directement au sol ou à toute sous-structure quelconque, de sorte que des modifications d'un disposition de transport peuvent être apportées en ajoutant ou en supprimant des modules d'itinéraire (1) dans la direction X et/ou Y.

5. Système de transport selon une ou plusieurs des revendications 1 à 4, **caractérisé en ce que** les véhicules de transport (2) sont équipés de batteries hautes performances pouvant être chargées dans le système de transport et **en ce que** les modules d'itinéraire (1) sont conçus sans câblage.

6. Système de transport selon une ou plusieurs des revendications 1 à 5, **caractérisé en ce que** les véhicules de transport (2) sont équipés de dispositifs d'absorption d'énergie inductifs qui interagissent avec des conducteurs (4) de courant inductifs qui sont guidés de manière modulaire à travers les modules d'itinéraire (1) pour conduire le courant.

7. Système de transport selon une ou plusieurs des revendications 1 à 6, **caractérisé en ce que** les véhicules de transport (2) sont conçus de telle manière qu'en cas d'adaptation à un nouveau disposition de transport ou en cas de modification d'un disposition de transport existant, la disposition et le codage actuels des modules d'itinéraire (1) leur sont transmis au moyen d'une transmission d'informations sans fil, par exemple via WLAN, sur la base du contenu d'informations des éléments de code (3).

8. Système de transport selon une ou plusieurs des revendications 1 à 7, **caractérisé en ce qu'**en relation avec la combinaison des modules d'itinéraire (1) et des véhicules de transport (2) autonomes en supprimant ou en ajoutant d'un ou de plusieurs modules d'itinéraire (1), une disposition de transport avec les itinéraires de transport nécessaires à l'intérieur d'un ou de chaque niveau de transport (T1, T2) peut être construite dans n'importe quelle affectation linéaire, bidimensionnelle ou de type échiquier nouvelle ou modifiée.

9. Système de transport selon une ou plusieurs des revendications 1 à 8, qui est conçu pour être utilisé comme système de transport pour déplacer des objets de stockage (14) et/ou comme système tampon pour stocker temporairement des objets de stockage (14).

10. Système de transport selon une ou plusieurs des revendications 1 à 8, qui est conçu pour être utilisé comme système de transport pour le stockage permanent et la récupération d'objets de stockage (14) et/ou comme système de tri pour la distribution ordonnée d'objets de stockage objets (14).
